(19) Europäisches Patentamt / European Patent Office / Office européen des brevets

(11) **EP 3 980 474 B1**

(12) **EUROPEAN PATENT SPECIFICATION**

(45) Date of publication and mention
of the grant of the patent:
**02.10.2024   Bulletin 2024/40**

(21) Application number: **20730278.7**

(22) Date of filing: **05.06.2020**

(51) International Patent Classification (IPC):
*C08F 210/06* (2006.01)      *C08L 23/12* (2006.01)

(52) Cooperative Patent Classification (CPC):
(C-Sets available)
**C08L 23/12;** C08F 210/06; C08L 2207/02    (Cont.)

(86) International application number:
**PCT/EP2020/065643**

(87) International publication number:
**WO 2020/245369 (10.12.2020 Gazette 2020/50)**

(54) **HETEROPHASIC PROPYLENE POLYMER COMPOSITION WITH HIGH TOUGHNESS AND STIFFNESS**

HETEROPHASISCHE POLYPROPYLENZUSAMMENSETZUNG MIT HOHER ZÄHIGKEIT UND STEIFIGKEIT

COMPOSITION DE POLYMÈRE DE PROPYLÈNE HÉTÉROPHASIQUE À TÉNACITÉ ET RIGIDITÉ ÉLEVÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.06.2019  EP 19178943**

(43) Date of publication of application:
**13.04.2022   Bulletin 2022/15**

(73) Proprietor: **Borealis AG**
**1020 Vienna (AT)**

(72) Inventors:
• **WANG, Jingbo**
  **4021 Linz (AT)**
• **GAHLEITNER, Markus**
  **4021 Linz (AT)**
• **BERNREITNER, Klaus**
  **4021 Linz (AT)**
• **BERGER, Friedrich**
  **4021 Linz (AT)**
• **LESKINEN, Pauli**
  **06101 Porvoo (FI)**

(74) Representative: **Kador & Partner Part mbB**
**Corneliusstraße 15**
**80469 München (DE)**

(56) References cited:
**EP-A1- 3 456 776**      **WO-A1-2008/077773**
**WO-A1-2017/148969**

Remarks:
The file contains technical information submitted after the application was filed and not included in this specification

(52) Cooperative Patent Classification (CPC): (Cont.)

C08F 2500/35

C-Sets

**C08F 10/06, C08F 4/6465;**
**C08F 10/06, C08F 4/651;**
**C08F 110/06, C08F 4/6492;**
**C08F 210/06, C08F 2/001;**
**C08L 23/12, C08L 23/16, C08L 23/14;**
C08F 210/06, C08F 210/14, C08F 2500/12,
C08F 2500/17, C08F 2500/27, C08F 2500/35;
C08F 210/06, C08F 210/16, C08F 2500/12,
C08F 2500/17, C08F 2500/33, C08F 2500/34,

## Description

The present invention relates to a heterophasic polypropylene composition with high toughness and stiffness comprising a heterophasic propylene copolymer and a copolymer of propylene and 1-hexene. The invention further relates to a process for preparing such a heterophasic polypropylene composition and its use for e.g. molded articles, in particular injection molded articles such as thin-walled containers.

## Background of the Invention

Injection molded parts for thin-walled packaging applications such as food packaging and plastic cups place specific requirements on the polymeric materials employed to produce these articles. Of paramount importance for these mass production applications is a good processability, which generally manifests itself in a high melt flow rate of the corresponding compositions. On the other hand, the articles must provide sufficient stiffness to hold the content such as foodstuffs contained therein as well as having sufficient stiffness to be stacked. Finally, the materials should also withstand mechanical compression damage, which is frequently caused by e.g. dropping the articles. Polypropylene-based polymers have many characteristics, which make them suitable for applications such as molded articles, but also pipes, fittings and foams. Frequently, polypropylene products of high stiffness are based on high molecular weight materials, which are often nucleated by adding nucleating agents, i.e. crystallization starts at a higher temperature and the crystallization speed is high. However, to increase the output rate during extrusion, a polymer of high flowability is generally preferred. This processability requirement can be achieved by low molecular weight compositions with a low viscosity, i.e. high melt flow rate (MFR) compositions, which albeit usually have less stiffness. In addition, stiffness affording compositions are usually brittle and thus products generated from these materials display poor impact resistance and are susceptible to structural damage when dropped. Therefore, a general problem for polypropylene compositions used in these applications is to reconcile the opposed requirements of high processability, stiffness, impact strength and toughness.

In this context, EP 2 585 527 A1 discloses a polyolefin composition comprising (A) from 1.0 to 9.5 wt.%; of a copolymer of propylene and 1-hexene wherein said copolymer comprises from 0.1 to 5 wt.% of recurring units derived from 1-hexene; and (B) from 80.5 to 99 wt.% of a heterophasic polypropylene composition comprising (B1) from 50 to 85 wt.% of a propylene homopolymer, said propylene polymer being insoluble in xylene at ambient temperature in an amount over 85 wt.% having a polydispersity index ranging from 3 to 10; and a melt index from 0.5 to 10 dg/min; and (B2) from 5 to 50 wt.% of a copolymer of ethylene and propylene having an ethylene derived units content ranging from 30% to 70%; said polymeric composition having a melt index from 0.05 to 10 dg/min.

WO 2008/074423 A1 discloses a heterophasic polypropylene composition with a high melt flow rate, good stiffness and an improved compression performance. The composition comprises a heterophasic propylene copolymer comprising: (a) a matrix phase (A) comprising a propylene homopolymer and/or a propylene copolymer, and (b) a disperse phase (B) comprising a propylene copolymer rubber dispersed in matrix phase (A), wherein (i) the polypropylene composition has a melt flow rate $MFR_2$ of 50 g/10min or higher, (ii) the propylene copolymer rubber of the disperse phase (B) has a comonomer content of 40 wt.% or higher, and (iii) the intrinsic viscosity IV of the disperse phase (B) and the $MFR_2$ of the matrix phase (A) fulfil a specific relationship. These compositions may be employed for the production of molded articles, in particular injection molded articles such as thin-walled plastic cups.

Impact copolymers (or heterophasic copolymers, HECOs) are widely used in different application areas like thin-wall packaging (TWP), films, automotive applications, due to their excellent cost/performance. In some application areas, e.g. TWP, the toughness, especially the puncture energy, is very important, beside the stiffness. It is believed that puncture energy is related to the drop height in TWP, the higher the puncture, the higher the drop height. However, problems occur when trying to reconcile the opposing properties of toughness and stiffness, i.e improvement of toughness leads to a deterioration of stiffness.

WO 2008/077773 A1 discloses a polyolefin composition comprising A) 10-60% of a copolymer of propylene and 1-hexene wherein said copolymer comprises from 0.2 to 10 % of recurring units derived from hexene-1; and B) 40-90% of a heterophasic polypropylene comprising: B1) 65-95% of a propylene polymer and B2) 5-35% of a copolymer of ethylene with a $C_3$-$C_{10}$ alpha-olefin and optionally a diene, having an ethylene content ranging from 15 to 60% and an intrinsic viscosity value of at least 1 dl/g.

EP 3 456 776 A1 discloses a propylene polymer composition comprising a heterophasic propylene copolymer and a propylene-hexene random copolymer and optional an alpha-nucleating agent, the composition having high flexural modulus, high Charpy notched impact strength (NIS) and low hexane content. The compositions may be used for cast or blown films suitable for sterilization treatment.

Therefore there is a need for heterophasic polypropylene compositions, which show high flowability and an improved impact/stiffness/toughness balance and are especially suitable for thin wall injection molded applications. Accordingly, it is an object of the present invention to provide such a composition. It is a further object to provide a multistage process for the preparation of such heterophasic polypropylene compositions having the above mentioned unique property balance. The present invention is based on the finding that the above objects can be achieved by a high melt flow heterophasic polypropylene composition in which a specific heterophasic propylene polymer comprising specific matrix and rubber design and a further copolymer are combined.

**Summary of the Invention**

The above objects are achieved by a polypropylene composition comprising a blend of

(A) 75.0 to 95.0 wt.% of a heterophasic propylene copolymer (HECO) comprising

(A-1) 70.0 to 90.0 wt.% of a matrix (M) being a propylene homopolymer (H-PP) with a $MFR_2$, (230°C, 2.16kg, ISO 1133) of from 20 - 800 g/10min, and

(A-2) 10.0 to 30.0 wt.% of an elastomeric propylene copolymer (EPC) dispersed in said matrix (M), said heterophasic propylene copolymer having an ethylene ($C_2$) co-monomer content, determined from its xylene cold soluble (XCS) fraction according to ISO 16152; first edition, 2005-07-01 at 25 °C, of from 15.0 to 60.0 wt.% and an intrinsic viscosity (IV) of the XCS fraction of from 1.2 to 4.5 dl/g, determined according to DIN ISO 1628/1 in decalin at 135°C, and

(B) 5.0 to 25.0 wt% of a copolymer (CPH) of propylene and 1-hexene,

wherein the copolymer (CPH) of propylene and 1-hexene has a hexene content in the range of from 2.0 to 10.0 wt.% and a $MFR_2$ (230°C, 2.16kg, ISO 1133) in a range of from 0.4 to 12.0 g/10 min, and

the copolymer (CPH) of propylene and 1-hexene comprises

(i) a first random propylene copolymer (B-1) of propylene and 1-hexene, and
(ii) a second random propylene copolymer (B-2) of propylene and 1-hexene having a higher 1-hexene content than the first random propylene copolymer (B-1),

wherein the polypropylene composition has a $MFR_2$ (230°C, 2.16kg, ISO 1133) in the range of from 15 to 300 g/10 min.
The above objects can further be achieved by a process for the preparation of such polypropylene compositions the following stages (i) and (ii) in any sequence:

(i) preparation of the matrix phase of the heterophasic propylene copolymer of the polypropylene composition, wherein stage (i) comprises the following steps:
B2) polymerisation of propylene to afford a propylene homopolymer, step B2 being conducted in at least one slurry phase reactor, and

(ii) preparation of the disperse phase of the heterophasic propylene copolymer of the polypropylene composition, wherein stage (ii) comprises the following step:
B3) co-polymerisation of propylene with an alpha-olefin comonomer to result in an olefin-propylene copolymer, step B3 being conducted in at least one gas phase reactor, and wherein:

(a) the process B2 is conducted at a reactor temperature of between 70 and 110 °C, and

(b) the process B3 is conducted at a reactor temperature of between 65 and 110 °C,

wherein the propylene-hexene random copolymer (B) is blended with the heterophasic propylene copolymer (A) by mechanical blending or by in situ-polymerization in any order.
Still further, the above objects are achieved by the use of such polypropylene compositions for the production of molded articles, in particular injection-molded articles, preferably thin-wall molded articles.
The special combination of components (A), (B) and optionally (C) enable compositions having improved stiffness/impact/toughness balance compared to other heterophasic polypropylene compositions which provide unique advantages for molded articles as described in detail below.

**Detailed Description of the Invention**

In the following the individual components encompassed by the present invention are defined in more detail.

The particular polypropylene composition of the present invention comprises at least component (A) being a heterophasic propylene copolymer (HECO) comprising a matrix (M) being a being a propylene homopolymer (H-PP) and an elastomeric propylene copolymer (EPC) dispersed in said matrix (M); component (B) being a copolymer (CPH) of propylene and 1-hexene; each component being defined as above and in more detail below.

The term "heterophasic polypropylene composition" used herein denotes compositions comprising the above heterophasic propylene copolymer (A), and the above copolymer of propylene and hexene (B).

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount that it can form a continuous phase which can act as a matrix.

Furthermore the terms "elastomeric propylene copolymer (EPC)", "xylene cold soluble (XCS) fraction of the heterophasic propylene copolymer", "dispersed phase" and "ethylene propylene rubber" denote the same, i.e. are interchangeable.

**(A) Heterophasic propylene copolymer (HECO)**

As described above, the polypropylene composition of the present invention comprises 75.0 to 95.0 wt.%, preferably 77 to 93 wt.%, more preferably 80 to 93 wt.%, based on the total amount of the composition, of a heterophasic propylene copolymer (HECO) comprises at least a matrix (M) being a being a propylene homopolymer (H-PP) and an elastomeric propylene copolymer (EPC) dispersed in said matrix (M).

The HECO comprises, based on the total amount of the HECO, 70.0 to 90.0 wt.% of matrix (M) being a propylene homopolymer (H-PP) with a $MFR_2$, (230°C, 2.16kg, ISO 1133) of from 20 - 800 g/10min, preferably 30 - 700 g/10min, more preferably 40 - 500 g/10min.

Preferably, the final melt flow rate of the heterophasic propylene copolymer (HECO) is adjusted during the polymerization process. Accordingly, the reactor-made heterophasic propylene copolymer (HECO) has the melt flow rate as defined above or in the claims. "Reactor-made heterophasic propylene copolymer (HECO)" denotes herein that the melt flow rate of the heterophasic propylene copolymer (HECO) has not been modified on purpose by post-treatment. Accordingly, in preferred embodiments the heterophasic propylene copolymer (HECO) is non-visbroken, particularly not visbroken using peroxide. Accordingly, the melt flow rate is not increased by shortening the chain length of the heterophasic propylene copolymer (HECO) according to this invention by use of peroxide. Thus, it is preferred that the heterophasic propylene copolymer (HECO) does not contain any peroxide and/or decomposition product thereof.

The HECO further comprises an ethylene ($C_2$) co-monomer content, determined from its xylene cold soluble (XCS) fraction according to ISO 16152; first edition, 2005-07-01 at 25 °C, of from 15.0 to 60.0 wt.%, preferably from 20.0 to 55.0 wt.%, more preferably from 25.0 to 50.0 wt.%.

The total content of comonomers, i.e. the sum of content of ethylene and alpha-olefins with 4 to 10 C-atoms, in the total heterophasic propylene copolymer (A) (HECO) is preferably in the range of 2.5 to 15.0 wt%, more preferably in the range of 3.0 to 12.0 wt% and even more preferably in the range of 5.0 to 11.0 wt%. It is particularly preferred that the co-monomers are ethylene co-monomers only.

The heterophasic propylene copolymer may preferably have a melting temperature ($T_m$) in the range of from 160 to 170 °C, more preferably 162 to 168 °C and/or a crystallization temperature ($T_c$) of greater than 110 °C, more preferably 112 to 140 °C, even more preferably 114 to 135 °C, such as 116 to 132 °C, $T_m$ and $T_c$ being measured by differential scanning calorimetry (DSC).

The heterophasic propylene copolymer (HECO) comprises at least two and optionally three polypropylene fractions (PP1), (PP2), and (PP3).

Embodiment 1

In one preferred embodiment the matrix polypropylene (PP) comprises three polypropylene fractions (PP1), (PP2), and (PP3). In this case the matrix (M), i.e. the polypropylene (PP) of the heterophasic propylene copolymer (HECO) comprises, preferably consist of:

(a-1) a first polypropylene fraction (PP1) being a first propylene homopolymer (H-PP1) or a first random propylene copolymer (R-PP1),

(a-2) a second polypropylene fraction (PP2) being a second propylene homopolymer (HPP2) or a second random propylene copolymer (R-PP2),

(a-3) a third polypropylene fraction (PP3) being a third propylene homopolymer (H-PP3) or a third random propylene copolymer (R-PP3),

whereby at least one of the three fractions (PP1), (PP2) and (PP3) is a propylene homopolymer, preferably at least the first polypropylene fraction (PP1) is a propylene homopolymer, more preferably the first polypropylene fraction (PP1) and the second polypropylene fraction (PP2) are propylene homopolymers and most preferably all three propylene fractions (PP1), (PP2) and (PP3) are propylene homopolymers.

The expression homopolymer used in the present invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable.

In Embodiment 1, the three polypropylene fractions (PP1), (PP2), and (PP3) differ from each other by the melt flow rate $MFR_2$ (230°C) measured according to ISO 1133. One of the three polypropylene fractions (PP1), (PP2), and (PP3), preferably the third polypropylene fraction (PP3), has a melt flow rate $MFR_2$ (230°C) measured according to ISO 1133 in the range of 2.0 to 22.0 g/10min, preferably in the range of 2.5 to 20.0 g/10min, still more preferably in the range of 3.0 to 18.0 g/10min. Still more preferably the polypropylene fraction with the melt flow rate $MFR_2$ (230°C) measured according to ISO 1133 in the range of 2.0 to 22.0 g/10min, i.e. in the range of 2.5 to 20.0 g/10min, like in the range of 3.0 to 18.0 g/10min, is the polypropylene fraction with the lowest melt flow rate $MFR_2$ (230°C) of the three polypropylene fractions (PP1), (PP2) and (PP3), preferably of all polypropylene fractions present, of the polypropylene (PP). Accordingly in one preferred embodiment the third polypropylene fraction (PP3) has the lowest melt flow rate $MFR_2$ (230°C) of the three polypropylene fractions (PP1), (PP2), and (PP3), wherein the melt flow rate $MFR_2$ (230°C) measured according to ISO 1133 of the third polypropylene fraction (PP3) is in the range of 2.0 to 22.0 g/10min, preferably in the range of 2.5 to 20.0 g/10min, still more preferably in the range of 3.0 to 18.0 g/10min.

In addition to the requirement that one of the three polypropylene fractions (PP1), (PP2) and (PP3) must have a melt flow rate $MFR_2$ (230°C) measured according to ISO 1133 in the range of 2.0 to 22.0 g/10min it is preferred that another fraction of the three polypropylene fractions (PP1), (PP2) and (PP3) has a melt flow rate $MFR_2$ (230 °C) measured according to ISO 1133 in the range of 80.0 to 500.0 g/10min, preferably in the range of 120.0 to 450.0 g/10min, more preferably in the range of 150.0 to 450.0 g/10min. Particularly the first polypropylene fraction (PP1) has a melt flow rate $MFR_2$ (230°C) measured according to ISO 1133 in the range of 80.0 to 500.0 g/10min, preferably in the range of 120.0 to 450.0 g/10min, more preferably in the range of 150.0 to 450.0 g/10min.

In one preferred embodiment the remaining polypropylene fraction of the three polypropylene fractions (PP1), (PP2) and (PP3), preferably the second polypropylene fraction (PP2), has a melt flow rate $MFR_2$ (230°C) measured according to ISO 1133 in the range of 10.0 to 300.0 g/10min, preferably in the range of 20.0 to 250.0 g/10min, more preferably in the range of 30.0 to 200.0 g/10min.

Thus, the matrix (M) of Embodiment 1 is multimodal, e.g. trimodal. It preferably contains the three fractions (PP1), (PP2), and (PP3) in certain amounts. Fraction (PP1) is preferably present in an amount of 30.0 to 45.0 wt%, fraction (PP2) is preferably in present in an amount of 25.0 to 40.0 wt% and fraction (PP3) present in an amount of in 5.0 to 20.0 wt%, all weight percentages related to the matrix and summing up to 100% of the matrix.

"Multimodal", like "bimodal" or "trimodal" describes a probability distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors have each their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions. A polymer showing such molecular weight distribution curve is called bimodal, trimodal or multimodal, respectively.

Embodiment 2

In a further preferred embodiment the matrix (M) comprises two polypropylene fractions (PP1) and (PP2). In this case the matrix (M), i.e. the polypropylene (PP) of the heterophasic propylene copolymer (HECO) comprises, preferably consist of:

(a-1) a first polypropylene fraction (PP1) being a first propylene homopolymer (H-PP1) or a first random propylene copolymer (R-PP1) and

(a-2) a second polypropylene fraction (PP2) being a second propylene homopolymer (HPP2) or a second random propylene copolymer (R-PP2),

whereby at least one of the two fractions (PP1) and (PP2) is a propylene homopolymer, preferably at least the first polypropylene fraction (PP1) is a propylene homopolymer, more preferably the first polypropylene fraction (PP1) and the second polypropylene fraction (PP2) are propylene homopolymers.

The polypropylene constituting the matrix in this case can be unimodal or multimodal, e.g. bimodal. When the matrix is bimodal, the first polypropylene fraction (PP1) and the second polypropylene fraction (PP2) differ at least in their melt flow rate, optionally also in their comonomer content. According to one preferred embodiment, the melt flow rate of the (PP1) fraction is higher than the melt flow rate of the (PP2) fraction, the ratio MFR(PP1)/MFR(PP2) being in the range of 2 to 10.

The propylene homo- or copolymer (PP) constituting the matrix for Embodiment 1 or Embodiment 2 may be produced by a single- or multistage process polymerization of propylene or propylene with alpha-olefin and/or ethylene such as bulk polymerization, gas phase polymerization, solution polymerization or combinations thereof, using conventional catalysts. A homo- or copolymer can be made either in loop reactors or in a combination of loop and gas phase reactors. Those processes are well known to the skilled person.

As stated above in both cases the matrix (M) is preferably a propylene homopolymer. When the propylene homopolymer matrix phase is unimodal with respect to the molecular weight distribution, it may be prepared in a single stage process e.g. a slurry (or bulk) or gas phase process in a slurry or gas phase reactor. Thus, a unimodal matrix phase may be polymerized in a slurry polymerization step only. Alternatively, the unimodal matrix may be produced in a multistage process (e.g. combination of slurry and gas phase) using at each stage process conditions which result in similar polymer properties.

A multimodal propylene homopolymer matrix may be produced by blending different polymer types, i.e. of different molecular weight and/or comonomer content. However in such a case it is preferred that the polymer components of the polypropylene matrix are produced in a sequential step process, using reactors in serial configuration and operating at different reaction conditions. As a consequence, each fraction prepared in a specific reactor will have its own molecular weight distribution and/or comonomer content distribution.

When the distribution curves (molecular weight or comonomer content) from these fractions are superimposed to obtain the molecular weight distribution curve or the comonomer content distribution curve of the final polymer, these curves may show two or more maxima or at least be distinctly broadened when compared with curves for the individual fractions. Such a polymer, produced in two or more serial steps, is called bimodal or multimodal, depending on the number of steps.

The propylene homopolymer matrix has a melt flow rate MFR, (ISO 1133; 230 °C; 2.16kg) in the range of 20 to 800 g/10min, preferably in the range of 50 to 700 g/10 min and more preferably in the range of 60 to 500 g/10 min. The $MFR_2$ of the matrix is named matrix melt flow rate ($MFR_M$).

Moreover it is preferred that the amount of xylene solubles of the propylene homopolymer matrix is not too high. Xylene solubles are the part of the polymer soluble in cold xylene determined by dissolution in boiling xylene and letting the insoluble part crystallize from the cooling solution (determined at 25°C according to ISO 16152, first edition, 2005-07-01). The xylene solubles fraction contains polymer chains of low stereo-regularity and is an indication for the amount of non-crystalline areas. Accordingly, it is preferred that the xylene solubles fraction of the propylene homopolymer matrix is in the range of 0.5 wt% to 4.5 wt%, more preferably in the range of 0.7 wt% to 4.0 wt%. In an even more preferred embodiment the xylene solubles fraction is in the range of 0.8 wt% to 3.5 wt%.

As stated above, the propylene homopolymer matrix can be unimodal or multimodal, e.g. bimodal or trimodal.

The elastomeric propylene copolymer (EPC) dispersed in the matrix (M), described above may preferably be a copolymer of propylene and ethylene and/or an alpha-olefin with 4-10 carbon atoms or any combination thereof, being dispersed in said matrix (M) (i.e. dispersed phase), and said elastomeric propylene copolymer (EPC) comprises at least one propylene copolymer fraction (EPC1) and optionally a second propylene copolymer fraction (EPC2). Thus, the elastomeric propylene copolymer (EPC) dispersed in the matrix (M) may be a unimodal or bimodal composition.

More preferably, the elastomeric propylene copolymer (EPC) is a copolymer of propylene and ethylene.

As stated above, the terms "elastomeric propylene copolymer (EPC)", "xylene cold soluble (XCS) fraction of the heterophasic propylene copolymer", "dispersed phase" and "ethylene propylene rubber" denote the same, i.e. are interchangeable.

Thus the amount of elastomeric propylene copolymer (EPC) constitutes the amount of the xylene cold soluble (XCS) fraction of the heterophasic propylene copolymer, determined according to ISO 16152; first edition, 2005-07-01 at 25 °C, which is in the range of 10.0 to 30.0 wt%, based on the total amount of the heterophasic propylene copolymer (HECO), preferably in the range of 12.0 to 28.0 wt% and more preferably in the range of 13.0 to 25.0 wt%.

The intrinsic viscosity (IV) of the XCS fraction is from 1.2 to 4.5 dl/g, preferably from 1.5 to 4.5 dl/g, more preferably from 2.0 to 4.0 dl/g, determined according to DIN ISO 1628/1 in decalin at 135°C.

In one embodiment, the dispersed phase is unimodal. More particularly, the dispersed phase is preferably unimodal in view of the intrinsic viscosity and/or the comonomer distribution. Concerning the definition of unimodal and multimodal, like bimodal, it is referred to the definition above. Preferably the unimodal dispersed phase is made in one reaction stage, more preferably in a gas phase reactor ad comprises, respectively consists of one propylene copolymer fractions (EPC1).

In another embodiment the dispersed phase comprises, preferably consists of two fractions, e.g. one propylene copolymer fractions (EPC1) and a second propylene copolymer fraction (EPC2).

These two fractions are preferably in-situ blended. The fractions (EPC1) and (EPC2) are preferably obtainable as described later. In this case the two fractions (EPC1) and (EPC2) differ in view of the intrinsic viscosity and/or the comonomer distribution.

Preferably, the first elastomeric propylene copolymer fractions (EPC1) has a comonomer content in the range of 20.0 - 35.0 wt%, more preferably, in the range 22.0 - 32.0 wt % and most preferably in the range of 24.0 - 30.0 wt %.

Preferably, the first elastomeric propylene copolymer fractions (EPC1) has an intrinsic viscosity (iV) measured according to ISO 1628/1 (at 135°C in decalin) of 2.0 - 3.2 dl/g, more preferably of 2.2 - 3.1 dl/g still more preferably of 2.4 - 3.0 dl/g.

The second elastomeric propylene copolymer fractions (EPC2) preferably has a comonomer content in the range of 35.0 - 60.0 wt%, more preferably in the range of 38.0 - 55.0 wt% and most preferably within the range of 40.0 - 53.0 wt%.

The second elastomeric propylene copolymer fractions (EPC2) preferably has an intrinsic viscosity (IV) measured according to ISO 1628/1 (at 135°C in decalin) of 3.2 - 4.5 dl/g, more preferably of 3.4 - 4.2 dl/g and most preferably of 3.5 - 4.0 dl/g.

The comonomer content of each of the first elastomeric propylene copolymer fractions (EPC1) and the second elastomeric propylene copolymer fractions (EPC2) can be measured for the first elastomeric propylene copolymer fractions (EPC1) and the mixture of first elastomeric propylene copolymer fractions (EPC1) and second elastomeric propylene copolymer fractions (EPC2). The second propylene copolymer fraction (EPC2) is then calculated. The calculation of the comonomer content is given below in the example section.

If the elastomeric propylene copolymer (EPC) is prepared separately from the polypropylene constituting the matrix, it can be subsequently blended with the matrix polymer by any conventional blending means, e.g. melt blending in an extruder.

Alternatively, the elastomeric propylene copolymer (EPC) can be prepared as a reactor blend together with the propylene homo- and/or copolymer (PP) constituting the matrix (M), e.g. starting with the production of the matrix polymer in a slurry, e.g. loop reactor and optionally a gas phase reactor, followed by transferring the product into one or more gas phase reactors, where the elastomeric propylene copolymer (EPC) is polymerized.

As described above, the heterophasic propylene copolymer (HECO) of the present invention comprises components (A-1) which is the matrix phase, and (A-2) which is the elastomeric propylene copolymer (EPC) dispersed in the matrix phase, and optional components (C).

The heterophasic propylene copolymer (HECO) according to the present invention apart from the polymeric components and the nucleating agent (C), may comprise further non-polymeric components, e.g. additives for different purposes.

The following are optional additives: process and heat stabilisers, pigments and other colouring agents allowing retaining transparency, antioxidants, antistatic agents, slip agents, antiblocking agent, UV stabilisers and acid scavengers. Depending on the type of additive, these may be added in an amount of 0.001 to 3.0 wt%, based on the weight of the heterophasic propylene copolymer (HECO).

**(B) Copolymer (CPH) of propylene and 1-hexene**

The polypropylene composition of the present invention comprises, besides component (A) described above, component (B) which is a copolymer (CPH) of propylene and 1-hexene in an amount of from 5.0 to 25.0 wt.%, preferably from 7.0 to 23.0 wt.%, more preferably from 7.0 to 20.0 wt.%, based on the total amount of the composition.

The copolymer (CPH) of propylene and 1-hexene is preferably a propylene-hexene random copolymer and has a hexene content in the range of from 2.0 to 10.0 wt%, preferably in the range of from 2.5 to 8.0 wt% and more preferably in the range of from 3.0 to 6.0 wt%.

The $MFR_2$ (230°C, 2.16kg, ISO1133) of the propylene-hexene random copolymer is in the range of from 0.4 to 12.0 g/10 min, preferably in the range of from 0.5 to 10.0 g/10 min, more preferably in the range of from 0.7 to 8.0 g/10 min and yet more preferably in the range of from 0.8 to 5.0 g/10 min.

The copolymer (CPH) of propylene and 1-hexene comprises

(i) a first random propylene copolymer (B-1) of propylene and 1-hexene, and

(ii) a second random propylene copolymer (B-2) of propylene and 1-hexene having a higher 1-hexene content than the first random propylene copolymer (B-1).

According to a preferred embodiment, the first random propylene copolymer (A) is a copolymer of propylene and a 1-hexene having a 1-hexene content in the range of 0.1 to 4.0 wt.-%, preferably in the range of 0.5 to 3.5 wt.-%, more preferably in the range of 0.8 to 3.0 wt.-%, still more preferably in the range of 1.0 to 2.5 wt.-%, and the second random propylene copolymer (B) is a copolymer of propylene and 1-hexene having an 1-hexene content in the range of 4.0 to 15.0 wt.-%, preferably in the range of 5.0 to 13.0 wt.-%, more preferably in the range of 6.0 to 12.0 wt.-%, still more preferably in the range of 6.5 to 10.0 wt.-%.

Accordingly, the first random propylene copolymer (A) in this embodiment is the 1-hexene lean fraction, whereas the second random propylene copolymer (B) is the 1-hexene rich fraction.

Even more preferably, with regard to the melt flow rate $MFR_2$, the copolymer (CPH) of propylene and 1-hexene may fulfil in-equation (1), still more preferably in-equation (1a), even more preferably in-equation (1b),

$$MFR(B\text{-}2)/MFR(B\text{-}1) \leq 1.0 \qquad (1),$$

$$0.5 \leq MFR(B\text{-}2)/MFR(B\text{-}1) \leq 1.0 \qquad (1a),$$

$$0.6 \leq MFR(B\text{-}2)/MFR(B\text{-}1) \leq 0.9 \qquad (1b),$$

wherein MFR(B-1) is the melt flow rate $MFR_2$ (230 °C, 2.16 kg) determined according to ISO 1133 in [g/10 min] of the first random propylene copolymer (B-1) and MFR(B-2) is the melt flow rate $MFR_2$ (230 °C, 2.16 kg) determined according to ISO 1133 in [g/10 min] of the copolymer (B-2).

Further, it is appreciated that the first random propylene copolymer (B-1) may preferably have a melt flow rate $MFR_2$ (230 °C, 2.16 kg) determined according to ISO 1133 in the range of 0.3 to 12.0 g/10 min, more preferably in the range of 0.5 to 9.0 g/10 min, still more preferably in the range of 0.7 to 6.0 g/10 min, like in the range of 1.0 to 3.0 g/10 min.

The second random propylene copolymer (B-2) may preferably have a melt flow rate $MFR_2$ (230 °C, 2.16 kg) determined according to ISO 1133 in the range of 0.5 to 14.0 g/10 min, more preferably in the range of 0.7 to 11.0 g/10 min, still more preferably in the range of 0.9 to 8.0 g/10 min, like in the range of 1.1 to 5.0 g/10 min.

Preferably, the weight ratio between the first random propylene copolymer (B-1) and the second random propylene copolymer (B-2) is in the range of 30:70 to 70:30, more preferably in the range of 35:65 to 65:35, still more preferably in the range of 40:60 to 60:40.

Preferably, the copolymer (CPH) of propylene and 1-hexene has a xylene soluble content (XCS) in the range of from 1.0 to 30.0 wt.%, more preferably 3 to 27 wt.%, even more preferably 5 to 23 wt.%, such as 8 to 20 wt.%, determined according to ISO 16152; first edition, 2005-07-01 at 25 °C.

The melting temperature Tm of the copolymer (CPH) of propylene and 1-hexene is in the range of from 120°C to 140°C, preferably in the range of from 120°C to 135°C and more preferably in the range of 125°C to 135°C.

Preferably the copolymer (CPH) of propylene and 1-hexene has a molecular weight distribution (Mw/Mn) in the range of 2.0 to 5.0 and more preferably in the range of 2.5 to 4.5. Additionally or alternatively to the molecular weight distribution (Mw/Mn) as defined in the previous paragraph the copolymer (CPH) of propylene and 1-hexene has preferably weight average molecular weight Mw in the range of 120 to 500 kg/mol, more preferably in the range of 130 to 400 kg/mol, like in the range of 135 to 300 kg/mol.

The propylene-hexene random copolymer as described above may preferably be prepared in the presence of a metallocene catalyst.

The metallocene catalyst can be a supported catalyst, using conventional supports or can be free from an external carrier. By free from an external carrier is meant that the catalyst does not contain an external support, such as an inorganic support, for example, silica or alumina, or an organic polymeric support material

Preferably used are metallocene catalysts which are free from an external carrier.

Especially preferred metallocene catalysts for the preparation of the copolymer (CPH) of propylene and 1-hexene are those described in EP 3 456 776 A1. Also the process for its preparation according to this document may preferably be adopted.

**(C) Preparation of the heterophasic propylene copolymer (HECO)**

The heterophasic propylene copolymer (HECO) in accordance with the present invention may be prepared by any suitable process, including in particular blending processes such as mechanical blending, including mixing and melt blending processes and any combinations thereof as well as in-situ blending during the polymerization process. These can be carried out by methods known to the skilled person, including batch processes and continuous processes.

The heterophasic propylene copolymer (HECO) according to the present invention is preferably prepared by a sequential polymerization process, as described below, in the presence of a catalyst system comprising a Ziegler-Natta Catalyst (ZN-C), a co-catalyst (Co) and optionally an external donor (ED), as described below.

The term "sequential polymerization system" according to this invention indicates that the heterophasic propylene copolymer (HECO), preferably nucleated, is produced in at least three reactors connected in series. Accordingly, the present polymerization system comprises at least a pre-polymerization reactor (PR), a first polymerization reactor (R1) and a second polymerization reactor (R2), a third polymerization reactor (R3) and optionally a fourth polymerization reactor (R4). The term "polymerization reactor" shall indicate that the main polymerization takes place.

Preferably, at least one of the two polymerization reactors (R1) and (R2) is a gas phase reactor (GPR). More preferably the second polymerization reactor (R2), the third polymerization reactor (R3) and the optional fourth polymerization reactor (R4) are gas phase reactors (GPRs), i.e. a first gas phase reactor (GPR1) and a second gas phase reactor (GPR2) and a third gas phase reactor (GPR3). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention, the slurry reactor (SR) is preferably a (bulk) loop reactor (LR). In this first polymerization reactor (R1) the first polypropylene fraction (PP1), preferably the first propylene homopolymer fraction (H-PP1), of the matrix polypropylene (PP) is produced.

Preferably, the propylene homopolymer of the first polymerization reactor (R1), i.e. the first propylene homopolymer fraction (H-PP1), more preferably the polymer slurry of the loop reactor (LR) containing the first propylene homopolymer fraction (H-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A.

By "direct feed" is meant a process wherein the content of the first polymerization reactor (R1), i.e. of the loop reactor (LR), the polymer slurry comprising the first propylene homopolymer fraction (H-PP1), is led directly to the next stage gas phase reactor.

Alternatively, the propylene homopolymer of the first polymerization reactor (R1), i.e. the first propylene homopolymer fraction (H-PP1), more preferably polymer slurry of the loop reactor (LR) containing the first propylene homopolymer fraction (H-PP1), may be also directed into a flash step or through a further concentration step before fed into the second polymerization reactor (R2), i.e. into the 1% gas phase reactor (GPR1). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2) and the third polymerization reactor (R3) and any subsequent reactor, for instance, the fourth polymerization reactor (R4) are preferably gas phase reactors (GPRs). Such gas phase reactors (GPR) can be any mechanically mixed or fluid bed reactors. Preferably, the gas phase reactors (GPRS) comprise a mechanically agitated fluid bed reactor with gas velocities of at least 0.2 m/sec. Thus, it is appreciated that the gas phase reactor is a fluidized bed type reactor preferably with a mechanical stirrer.

Thus, in a preferred embodiment the first polymerization reactor (R1) is a slurry reactor (SR), like loop reactor (LR), whereas the second polymerization reactor (R2) and the third polymerization reactor (R3), and the optional fourth polymerization reactor (R4) are gas phase reactors (GPRs).

Accordingly, in the present process at least three, preferably three polymerization reactors (R1), (R2) and (R3) or four polymerization reactors (R1), (R2), (R3) and (R4), namely a slurry reactor (SR), like loop reactor (LR) and a (first) gas phase reactor (GPR1), a second gas phase reactor (GPR2), and optionally a third gas phase reactor (GPR3) connected in series are used.

Prior to the slurry reactor (SR) a pre-polymerization reactor is placed. As the process covers also a pre-polymerization step, all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

Especially good results are achieved in case the temperature in the reactors is carefully chosen. Accordingly it is preferred that the operating temperature in the first polymerization reactor (R1) is in the range of 62 to 85°C, more preferably in the range of 65 to 82°C, still more preferably in the range of 67 to 80°C.

Alternatively or additionally to the previous paragraph it is preferred that the operating temperature in the second polymerization reactor (R2) and in the third reactor (R3) and the optional the fourth reactor (R4) is in the range of 75 to 95°C, more preferably in the range of 78 to 92°C.

Preferably, the operating temperature in the second polymerization reactor (R2) is equal to or higher than the operating temperature in the first polymerization reactor (R1). Accordingly, it is preferred that the operating temperature

(a) in the first polymerization reactor (R1) is in the range of 62 to 85°C, more preferably in the range of 65 to 82°C, still more preferably in the range of 67 to 80°C, like 70 to 80°C; and

(b) in the second polymerization reactor (R2) is in the range of 75 to 95°C, more preferably in the range of 78 to 92°C, still more preferably in the range of 78 to 88°C, with the proviso that the operating temperature in the in the second polymerization reactor (R2) is equal or higher to the operating temperature in the first polymerization reactor (R1).

Typically, the pressure in the first polymerization reactor (R1), preferably in the loop reactor (LR), is in the range from 20 to 80 bar, preferably 30 to 70 bar, like 35 to 65 bar, whereas the pressure in the second polymerization reactor (R2), i.e. in the (first) gas phase reactor (GPR1), and in any subsequent reactor, like in the third polymerization reactor (R3), e.g. in the second gas phase reactor (GPR2), or in a fourth polymerization reactor (R4), e.g. in the third gas phase reactor (GPR3) is in the range from 5 to 50 bar, preferably 10 to 40 bar. Preferably, hydrogen is added in each polymerization reactor in order to control the molecular weight, i.e. the melt flow rate MFR.

Preferably, the average residence time is rather long in the polymerization reactors (R1) and (R2). In general, the average residence time (1) is defined as the ratio of the reaction volume (VR) to the volumetric outflow rate from the reactor (Qo) (i.e. VR/Qo), i.e T = VR/Qo [tau = VR/Qo]. In case of a loop reactor the reaction volume (VR) equals to the reactor volume.

Accordingly, the average residence time (1) in the first polymerization reactor (R1) is preferably at least 5 min, more preferably in the range of 15 to 80 min, still more preferably in the range of 20 to 60 min, like in the range of 24 to 50 min, and/or the average residence time (1) in the second polymerization reactor (R2) is preferably at least 70 min, more preferably in the range of 70 to 220 min, still more preferably in the range of 80 to 210 min, yet more preferably in the range of 90 to 200 min, like in the range of 90 to 190 min. Preferably the average residence time (1) in the third polymerization reactor (R3) or in the fourth polymerization reactor (R4) - if present- is preferably at least 30 min, more preferably in the range of 30 to 120 min, still more preferably in the range of 40 to 100 min, like in the range of 50 to 90 min.

As mentioned above, the preparation of the heterophasic propylene copolymer (HECO) comprises in addition to the (main) polymerization of the propylene polymer in the at least three polymerization reactors (R1, R2, R3 and optional R4) prior thereto a pre-polymerization in a pre-polymerization reactor (PR) upstream to the first polymerization reactor (R1).

In the pre-polymerization reactor (PR) a polypropylene (Pre-PP) is produced. The prepolymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR).

The pre-polymerization reaction is typically conducted at a temperature of 10 to 60°C, preferably from 15 to 50°C, and more preferably from 20 to 45°C. The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed can be employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor. The precise control of the pre-polymerization conditions and reaction parameters is within the skill of the art.

Due to the above defined process conditions in the pre-polymerization, a mixture (MI) of the Ziegler-Natta catalyst (ZN-C) and the polypropylene (Pre-PP) produced in the prepolymerization reactor (PR) is obtained. Preferably, the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the present invention and within the skilled knowledge.

Accordingly, the propylene polymer is preferably produced in a process comprising the following steps under the conditions set out above:

a) In the pre-polymerization, a mixture (MI) of the Ziegler-Natta catalyst (ZN-C) and the polypropylene (Pre-PP) produced in the pre-polymerization reactor (PR) is obtained. Preferably, the Ziegler-Natta catalyst (ZN-C) is (finely) dispersed in the polypropylene (Pre- PP). Subsequent to the pre-polymerization, the mixture (MI) of the Ziegler-Natta catalyst (ZNC) and the polypropylene (Pre-PP) produced in the pre-polymerization reactor (PR) is transferred to the first reactor (R1). Typically, the total amount of the polypropylene (Pre-PP) in the final heterophasic propylene copolymer (HECO) is rather low and typically not more than 5.0 wt%, more preferably not more than 4.0 wt%, still more preferably in the range of 0.5 to 4.0 wt%, like in the range 1.0 of to 3.0 wt%.

b) In the first polymerization reactor (R1), i.e. in a loop reactor (LR), propylene is polymerized, obtaining a first propylene homopolymer fraction (H-PP1) of the propylene homopolymer (HPP), transferring said first propylene homopolymer fraction (H-PP1) to a second polymerization reactor (R2),

c) in the second polymerization reactor (R2) propylene is polymerized in the presence of the first propylene homopolymer fraction (H-PP1), obtaining a second propylene homopolymer fraction (H-PP2) of the propylene homopolymer. Said fraction [H-PP1+H-PP2] is further transferred to a third polymerization reactor R3 obtaining a either a third propylene homopolymer fraction (H-PP3) or a first propylene copolymer fractions (EPC1) in the presence of all fractions produced in earlier steps.

Optionally, it is possible to transfer the entire polymer produced to a fourth polymerization reactor R4, i.e. either [H-PP1+H-PP2 + H-PP3] or [H-PP1+H-PP2 + EPC1], obtaining either a first propylene copolymer fractions (EPC1) or a second propylene copolymer fraction (EPC2) in the presence of all fractions produced in earlier steps.

Consequently, the preferably nucleated polymer produced may comprise the following fractions:

(i) the polypropylene (Pre-PP) produced in the pre-polymerization reactor (PR) + a first propylene homopolymer fraction (H-PP1) + a second propylene homopolymer fraction (H-PP2) + a propylene copolymer fractions (EPC1) or
(ii) the polypropylene (Pre-PP) produced in the pre-polymerization reactor (PR) + a first propylene homopolymer fraction (H-PP1) + a second propylene homopolymer fraction (H-PP2) + a third propylene homopolymer fraction (H-PP3) + a propylene copolymer fractions (EPC1) or
(iii) the polypropylene (Pre-PP) produced in the pre-polymerization reactor (PR) + a first propylene homopolymer fraction (H-PP1) + a second propylene homopolymer fraction (H-PP2) + a first propylene copolymer fractions (EPC1) + a second propylene copolymer fractions (EPC2).

By using - as stated above - a loop reactor and at one or two gas phase reactor in serial configuration and working at different conditions, a multimodal (e.g. bimodal or trimodal) propylene homopolymer matrix (M) can be obtained. If the loop reactor and the first gas phase reactor are run under conditions yielding similar polymers, a unimodal matrix can be obtained.

A preferred multistage process is a "loop-gas phase" process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

The catalyst components are preferably all introduced to the prepolymerization step. However, where the solid catalyst component (i) and the co-catalyst (ii) can be fed separately it is possible that only a part of the co-catalyst is introduced into the prepolymerization stage and the remaining part into subsequent polymerization stages. Also in such cases it is necessary to introduce so much co-catalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor. The precise control of the prepolymerization conditions and reaction parameters is within the skill of the art.

According to the present invention, the heterophasic propylene copolymer (HECO) is obtained by a multistage polymerization process, as described above, in the presence of a catalyst system. In the process described above a Ziegler-Natta catalyst (ZN-C) for the preparation of the heterophasic polypropylene composition is applied. This Ziegler-Natta catalyst (ZN-C) can be any stereo-specific Ziegler-Natta catalyst (ZN-C) for propylene polymerization, which preferably is capable of catalysing the polymerization and copolymerization of propylene and comonomers at a pressure of 500 to 10.000 kPa, in particular 2.500 to 8.000 kPa, and at a temperature of 40 to 110°C, in particular of 60 to 110°C.

Preferably, the Ziegler-Natta catalyst (ZN-C) comprises a high-yield Ziegler-Natta type catalyst including an internal donor component, which can be used at high polymerization temperatures of 80°C or more. Such high-yield Ziegler-Natta catalyst (ZN-C) can comprise a non-phthalate based internal donor preferably selected from optionally substituted malonates, maleates, succinates, glutarates, cyclohexene-1,2-dicarboxylates, benzoates, a diether and derivatives and/or mixtures thereof, preferably from citraconates, or a phthalate-based donor, like DEHP, etc., or mixtures therefrom as internal donor (ID). The Ziegler-Natta catalyst (ZN-C) is preferably used in association with an alkyl aluminum co-catalyst (Co) and optionally external donors (ED). As further component in the instant polymerization process an external donor (ED) is preferably present. Suitable external donors include certain silanes, ethers, esters, amines, ketones, heterocyclic compounds and blends of these. It is especially preferred to use a silane. It is most preferred to use silanes of the general formula

$$R^a_p R^b_q Si(OR^c)_{4-p-q}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the dicyclopentyl dimethoxy silane donor (D-donor) or the cyclohexylmethyl dimethoxy silane donor (C-Donor). In addition to the Ziegler-Natta catalyst (ZN-C) and the optional external donor (ED), a co-catalyst (Co) can be used. The co-catalyst (Co) is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminum, like triethylaluminum (TEAL), dialkyl aluminum chloride or alkyl aluminum dichloride or mixtures thereof. In one specific embodiment the co-catalyst (Co) is triethylaluminum (TEAL).

Preferably, the ratio between the co-catalyst (Co) and the external donor (ED) [Co/ED] and/or the ratio between the co-catalyst (Co) and the transition metal (TM) [Co/TM] should be carefully chosen. Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally

(b) the mol-ratio of co-catalyst (Co) to titanium compound (TC) [Co/TC] must be in the range of above 80 to 500, preferably is in the range of 100 to 350, still more preferably is in the range of 120 to 300.

According to the present invention, high-stiffness, high toughness propylene polymers are obtained when the catalyst is used in the presence of strongly coordinating external donors.

A process for the production of a heterophasic propylene copolymer (HECO) of the present invention is also an object of the present invention. Such a process comprising the following stages (i) and (ii) in any sequence:

(i) preparation of the matrix phase of the heterophasic propylene copolymer of the polypropylene composition, wherein stage (i) comprises the following steps:
B2) polymerisation of propylene to afford a propylene homopolymer, step B2 being conducted in at least one slurry phase reactor, and

(ii) preparation of the disperse phase of the heterophasic propylene copolymer of the polypropylene composition, wherein stage (ii) comprises the following step:

B3) co-polymerisation of propylene with an alpha-olefin comonomer to result in an olefin-propylene copolymer, step B3 being conducted in at least one gas phase reactor, and wherein:

a) the process B2 is conducted at a reactor temperature of between 70 and 110 °C, and

b) the process B3 is conducted at a reactor temperature of between 65 and 110 °C,

wherein the propylene-hexene random copolymer (B) is blended with the heterophasic propylene copolymer (A) by mechanical blending or by in situ-polymerization in any order.

Such a process may preferably comprise the polymerization of propylene in the presence of

a) a Ziegler-Natta catalyst (ZN-C) comprising compounds (TC) of a transition metal of Group 4 to 6 of the IUPAC Periodic Table of Elements, a Group 2 metal compound (MC) and an internal donor (ID), wherein said internal donor (ID) is a non-phthalic compound, preferably is a non-phthalic acid ester,

b) a co-catalyst (Co), and

c) optionally an external donor (ED).

**(D) Heterophasic polypropylene composition**

The polypropylene composition according to the present invention can be obtained by (melt)-mixing the individual fractions, i.e. heterophasic propylene copolymer (HECO) (A) and copolymer (CPH) of propylene and 1-hexene (B). During the melt mixing suitable additives can additionally be added. For mixing, a conventional compounding or blending apparatus, e.g. a Banbury mixer, a 2-roll rubber mill, Buss-co-kneader, a single screw extruder with special mixing segments or a twin screw extruder may be used. The polymer composition recovered from the extruder is usually in the form of pellets.

In the blend for the polypropylene composition according to the present invention component (A) is present in an amount of from 75.0 to 95.0 wt% and component (B) is present in an amount of from 5.0 to 25.0 wt%.

Preferably component (A) is present in an amount of from 77.0 to 93.0 wt% and more preferably in an amount of from 80.0 to 93.0 wt%.

Thus component (B) is preferably present in an amount of from 7.0 to 23.0 wt% and more preferably in an amount of from 7.0 to 20.0 wt%.

The overall melt flow rate, i.e. the melt flow rate $MFR_2$ (230 °C) measured according to ISO 1133 of polypropylene composition is in a range of from 15 to 300 g/10 min, preferably in a range of from 15 to 200 g/10 min, more preferably in a range of from 20 to 150 g/10 min and even more preferably in a range of from 25 to 50 g/10 min.

It is appreciated that the inventive polypropylene composition preferably has a melting temperature Tm in the range of from 160°C to 170°C, more preferably in the range of from 162°C to 168°C, determined by differential scanning calorimetry (DSC) as described in the example section.

Additionally it is appreciated that the inventive polypropylene composition preferably has a crystallization temperature of more than 110°C, more preferably in the range of from 112°C to 140°C and even more preferably in the range of from 114°C to 135°C, such as 116 to 132 °C, determined by differential scanning calorimetry (DSC) as described in the example section.

The polypropylene composition may preferably exhibit a flexural modulus, determined according to ISO 178:2010, in the range of from 900 to 1900 MPa.

The polypropylene composition may preferably exhibit a Charpy notched impact strength at 23 °C, determined according to ISO 179 1eA, of at least 5.5 kJ/m$^2$.

The polypropylene composition may preferably exhibit a puncture energy, determined according to the instrumented falling weight test according to ISO 6603-2 at 23 °C as described herein, of at least 15.0 J.

**(E) Use of the heterophasic polypropylene composition**

The present invention is further concerned with a molded article comprising the heterophasic polypropylene composition of the present invention. The main end-uses for such molded articles are in packaging applications like thin-wall packaging for frozen or fresh food, adhesives, cosmetics or pharmaceuticals. Other end-uses are plastic containers and household articles, but also medical products, rigid packaging like detergent cartons, cup and plate boards for oven or microwave use or sterilizable food packaging, especially for deep freeze or refrigerator uses. The present invention provides the specific advantage that such articles may be produced with lower wall thicknesses without expense in the flowability of the polypropylene compositions and still having excellent impact and toughness properties. Furthermore, the stiffness/impact/toughness balance of the articles produced with the heterophasic polypropylene composition of the present invention is excellent.

The articles may be produced by any common conversion process suitable for thermoplastic polymers, like injection molding, extrusion blow molding, injection stretch blow molding or cast film extrusion.

## Experimental Part

### A. Measuring methods

The following definitions of terms and determination methods apply for the above general description of the invention including the claims as well as to the below examples unless otherwise defined.

### (i) Quantification of microstructure by NMR spectroscopy

Quantitative nuclear-magnetic resonance (NMR) spectroscopy was used to quantify the isotacticity and regio-regularity of the propylene homopolymers.

Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$, respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-d$_2$ (TCE-d$_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V. et al., Macromolecules 30 (1997) 6251). Standard single-pulse excitation was employed utilising the NOE and bi-level WALTZ16 decoupling scheme (Zhou, Z. et al., J. Mag. Reson. 187 (2007) 225; Busico, V. et al., Rapid Commun. 2007, 28, 11289). A total of 8192 (8k) transients were acquired per spectra.

Quantitative $^{13}C\{^{1}H\}$ NMR spectra were processed, integrated and relevant quantitative properties determined from the integrals using proprietary computer programs. For propylene homopolymers all chemical shifts are internally referenced to the methyl isotactic pentad (mmmm) at 21.85 ppm. Characteristic signals corresponding to regio defects (Resconi, L., et al., Chem. Rev. 2000, 100, 1253; Wang, W-J., Zhu, S., Macromolecules 33 (2000), 1157; Cheng, H. N., Macromolecules 17 (1984), 1950) or comonomer were observed. The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., et al., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., et al., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \text{ mol.-\%} = 100 * (P_{21e} / P_{total})$$

**(ii) Comonomer determination by NMR spectroscopy**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium-(III)- acetylacetonate (Cr(acac)$_3$) resulting in a 65 mM solution of relaxation agent in solvent (Singh, G., et al., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al., J. Mag. Reson. 187 (2007) 225; Busico, V., et al., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950).

With characteristic signals corresponding to 2,1 erythro regio defects observed (as described in L. Resconi, L. et al., Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the region-defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\delta\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \text{ [mol\%]} = 100 * fE$$

The weight percent comonomer incorporation was calculated from the mole fraction:

$$E\ [wt\%] = 100 * (fE * 28.06) / ((fE * 28.06) + ((1\text{-}fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**(iii) Melt Flow Rate (MFR)**

The melt flow rates $MFR_2$ are measured with a load of 2.16 kg at 230 °C for propylene copolymers. The melt flow rate is the quantity of polymer in grams which the test apparatus standardised to ISO 1133 extrudes within 10 minutes at a temperature of 230 °C under a load of 2.16 kg. The $MFR_2$ of a fraction (B) produced in the presence of a fraction (A) is calculated using the measured values of $MFR_2$ of fraction (A) and the mixture received after producing fraction (B) ("final"):

$$Log(MFR_{final}) = \text{weight fraction(A)} * Log(MFR_A) + \text{weight fraction(B)} * Log(MFR_B)$$

**(iv) Xylene soluble fraction (XCS, wt%)**

The amount of the polymer soluble in xylene is determined at 25°C according to ISO 16152; 5. edition; 2005-07-01.

**(v) Intrinsic viscosity (iV)**

The intrinsic viscosity (iV) value increases with the molecular weight of a polymer. The iV values e.g. of the XCS were measured according to ISO 1628/1 in decalin at 135°C.

**(vi) DSC analysis, melting temperature (Tm), melting enthalpy (Hm), crystallization temperature (Tc) and crystallization enthalpy (Hc)**

These properties were measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (Tc) and crystallization enthalpy (Hc) are determined from the cooling step, while melting temperature (Tm) and melting enthalpy (Hm) are determined from the second heating step, respectively, from the first heating step in case of the webs.

**(vii) Charpy notched impact strength**

Charpy notched impact is measured according to ISO 179/1eA at +23°C and at -20°C using an injection molded test specimen (80 x 10 x 4 mm) as produced according to ISO 1873.

**(viii) Tensile properties**

Tensile properties were determined according to ISO 527-2 on injection ISO multipurpose molded specimens prepared in accordance with EN ISO 1873-2.
Tensile modulus (in MPa) was determined according to ISO 527-2. The measurement was conducted at 23°C with an elongation rate of 1 mm/min.

**(ix) Flexural Modulus**

The flexural modulus was determined in 3-point-bending according to ISO 178 on $80x10x4\ mm^3$ test bars injection molded at 23°C in line with EN ISO 1873-2.

**(x) Puncture energy (IPT)**

Puncture energy (IPT) is determined in the instrumented falling weight test according to ISO 6603-2 using injection molded plaques of 60x60x1 mm and a test speed of 2.2 m/s, clamped, lubricated striker with 20 mm diameter. The reported puncture energy results from an integral of the failure energy curve measured at (60x60x1 mm).

**B. Examples**

**a) Catalyst preparation**

3.4 liters of 2-ethylhexanol and 810 ml of propylene glycol butyl monoether (in a molar ratio 4/1) were added to a 20 l reactor. Then 7.8 liters of a 20 % solution in toluene of BEM (butyl ethyl magnesium) provided by Crompton GmbH were slowly added to the well stirred alcohol mixture. During the addition the temperature was kept at 10°C. After addition the temperature of the reaction mixture was raised to 60°C and mixing was continued at this temperature for 30 minutes. Finally after cooling to room temperature the obtained Mg-alkoxide was transferred to storage vessel.

21.2 g of Mg alkoxide prepared above was mixed with 4.0 ml bis(2-ethylhexyl) citraconate for 5 min. After mixing the obtained Mg complex was used immediately in the preparation of catalyst component.

19.5 ml titanium tetrachloride was placed in a 300 ml reactor equipped with a mechanical stirrer at 25°C. Mixing speed was adjusted to 170 rpm. 26.0 of Mg-complex prepared above was added within 30 minutes keeping the temperature at 25°C. 3.0 ml of Viscoplex 1-254 and 1.0 ml of a toluene solution with 2 mg Necadd 447 was added. Then 24.0 ml of heptane was added to form an emulsion. Mixing was continued for 30 minutes at 25°C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80°C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of $TiCl_4$ and 1 ml of donor.

Wash 3: Washing was made with 100 ml toluene.

Wash 4: Washing was made with 60 ml of heptane.

Wash 5. Washing was made with 60 ml of heptane under 10 minutes stirring.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

**b) Polymerization**

Polymerization was conducted on a Borstar pilot plant with the set up of prepolymerizer loop, first gas phase reactor (GPR1) and second gas phase reactor (GPR2). The catalyst used were described above. The concentration of monomers in the reactor are adjusted by man skilled in the art to reach the desired polymer compostion, and the typical conditions are shown in Table 1. The powder were mixed with 1500 ppm of B225 and 500 ppm of calcium stearate in ZSK 57, with melting temperature of 210°C, throughput about 200kg/h. The properties, e.g. MFR, Tm, XCS, etc, were measured and shown in Table 1.

**Table 1:** Polymerization conditions

|  |  | PP1 | PP2 |
|---|---|---|---|
| Prepolymerizer |  |  |  |
| Temperature | °C | 20 | 20 |
| Teal | g/t C3 | 170 | 170 |
| Donor | g/t C3 | 45 | 45 |
| Loop |  |  |  |
| Feed H2/C3 | mol/kmol | 11.5 | 11.5 |
| Temperature | °C | 80 | 80 |
| Pressure | bar | 55 | 55 |
| Split | wt% | 54 | 49 |
| First gas phase reactor |  |  |  |
| Temperature | °C | 80 | 80 |

(continued)

| First gas phase reactor | | | |
|---|---|---|---|
| H2/C3 | mol/kmol | 109.2 | 109.2 |
| Pressure | bar | 21 | 21 |
| Split | wt% | 36 | 33 |
| Second gas phase reactor | | | |
| Temperature | °C | 70 | 70 |
| H2/C3 | mol/kmol | 110 | 107 |
| C2/C3 | mol/kmol | 985 | 405 |
| Split | wt% | 10.6 | 18.5 |
| Pellets | | | |
| MFR | g/10min | 47 | 42 |
| Tm | °C | 164 | 164 |
| Tc | °C | 120 | 120 |
| XCS | wt% | 14.23 | 18.46 |
| C2(XCS) | wt% | 47.39 | 34.89 |
| IV(XCS) | dl/g | 3.3 | 3.02 |

The CPH is a random ethylene-hexene copolymer with a C6 co-monomer content of about 5 wt.% and a $MFR_2$ of 1.5 g/10min. It was produced in a two stage polymerization process pilot plant with a metallocene catalyst as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) is prepared as described in WO 2013/007650 A1 (metallocene E2 in WO 2013/007650 A1).

The random ethylene-hexene copolymer (CPH) was prepared in a sequential process comprising a loop reactor and a gas phase reactor. The reaction conditions are summarized in Table 2.

**Table 2:** Preparation of CPH

| | | CPH |
|---|---|---|
| **Prepolymerization** | | |
| Temperature | [°C] | 20 |
| Catalyst feed | [g/h] | 2.5 |
| TEAL/C3 | [g/t] | 0 |
| C3 feed | [kg/h] | 60.7 |
| H2 feed | [g/h] | 0.5 |
| **Residence time** | [h] | 0.2 |
| **Loop (R1)** | | |
| Temperature | [°C] | 70 |
| Pressure | [kPa] | 5292 |
| H2/C3 ratio | [mol/kmol] | 0.08 |
| C6/C3 ratio | [mol/kmol] | 14.1 |
| $MFR_2$ | [g/10min] | 1.8 |
| XCS | [wt.-%] | 1.9 |
| C6 | [wt.-%] | 1.7 |
| Residence time | [h] | 0.5 |
| Split | [wt.-%] | 42.0 |

**Table 2:** Preparation of CPH *(continued)*

| | | CPH |
|---|---|---|
| **GPR (R2)** | | |
| Temperature | [°C] | 80 |
| Pressure | [kPa] | 2406 |
| H2/C3 ratio | [mol/kmol] | 0.8 |
| C6/C3 ratio | [mol/kmol] | 9.2 |
| C6 (GPR) | [wt.-%] | 8.2 |
| $MFR_2$ (GPR) | [g/10min] | 1.2 |
| Residence time | [h] | 2.6 |
| Split | [wt.-%] | 58.0 |
| C6 | [wt.-%] | 5.5 |
| XCS | [wt.-%] | 25.0 |
| C6 (XCS) | [wt.-%] | 7.2 |
| 1,2e | [mol-%] | 0.47 |
| $MFR_2$ (copolymer) | [g/10min] | 1.4 |
| MFR(CPH)/MFR(R1) | - | 0.78 |

Compounding of the inventive and comparative examples was done on a ZSK 18 twin screw extruder with 15 wt.% of the random ethylene-hexene copolymer. Mass tremperature: 230 °C. 0.1 wt.-% of Irganox B225 (1:1-blend of Irganox 1010 and Irgafos 168) of BASF AG, Germany), and 0.05 wt.-% calcium stearate were added during compounding.

Properties of the compositions are shown in Table 3 below.

**Table 3**

| | | IE1 | IE2 | CE1 | CE2 |
|---|---|---|---|---|---|
| PP1 | wt.% | 85 | | 100 | |
| PP2 | wt.% | | 85 | | 100 |
| CPH | wt.% | 15 | 15 | | |
| $MFR_2$ | g/10min | 31.66 | 29.92 | 47 | 42 |
| FM | MPa | 1279 | 1174 | 1365 | 1234 |
| NIS/23°C | $kJ/m^2$ | 5.54 | 8.45 | 3.97 | 6.7 |
| NIS/-20°C | $kJ/m^2$ | 3.41 | 4.5 | 3.37 | 4.5 |
| IPT/23°C | J | 23.08 | 24.24 | 11.62 | 24.64 |
| IPT/-20°C | J | 16.85 | 27.64 | 4.77 | 24.33 |

As can be seen, the addition of the random ethylene-hexene copolymer to the heterophasic propylene copolymer (IE1, IE2) can improve the toughness (NIS and puncture energy), when compared to compositions which lack the ethylene-hexene copolymer (CE1, CE2). Still, the stiffness decrease, expressed as flexural modulus (FM) is at an acceptable level, making the inventive composition highly attractive for thin-wall packaging applications in terms of advanced impact/stiffness/toughness balance.

**Claims**

1. Polypropylene composition comprising a blend of

    (A) 75.0 to 95.0 wt.%, based on the total amount of the composition, of a heterophasic propylene copolymer (HECO) comprising

        (A-1) 70.0 to 90.0 wt.%, based on the total amount of the HECO, of a matrix (M) being a propylene homopolymer (H-PP) with a $MFR_2$, determined at 230°C, 2.16 kg according to ISO 1133 of from 20 - 800 g/10min, and
        (A-2) 10.0 to 30.0 wt.%, based on the total amount of the HECO, of an elastomeric propylene copolymer (EPC) dispersed in said matrix (M), said heterophasic propylene copolymer having an ethylene ($C_2$) comonomer content, determined from its xylene cold soluble (XCS) fraction according to ISO 16152; first edition, 2005-07-01 at 25 °C, of from 15.0 to 50.0 wt.% and an intrinsic viscosity (IV) of the XCS fraction of from 1.2 to 4.5 dl/g, determined according to DIN ISO 1628/1 in decalin at 135°C, and

    (B) 5.0 to 25.0 wt% , based on the total amount of the composition, of a copolymer (CPH) of propylene and 1-hexene,

        wherein the copolymer (CPH) of propylene and 1-hexene has a hexene content in the range of from 2.0 to 10.0 wt.% and a $MFR_2$ determined at 230°C, 2.16 kg according to ISO 1133 in a range of from 0.4 to 12.0 g/10 min, and
        the copolymer (CPH) of propylene and 1-hexene comprises

            (i) a first random propylene copolymer (B-1) of propylene and 1-hexene, and
            (ii) a second random propylene copolymer (B-2) of propylene and 1-hexene having a higher 1-hexene content than the first random propylene copolymer (B-1),

    wherein the polypropylene composition has a $MFR_2$ determined at 230°C, 2.16 kg according to ISO 1133 in the range of from 15 to 300 g/10 min.

2. The polypropylene composition according to claim 1, wherein the copolymer (CPH) of propylene and 1-hexene has a xylene soluble content (XCS) in the range of from 1.0 to 30.0 wt.-%, determined according to ISO 16152; first edition, 2005-07-01 at 25 °C.

3. The polypropylene composition according to claim 1 or 2, wherein the comonomer of the elastomeric propylene copolymer (EPC) dispersed in the matrix (M) is an ethylene and a C4 to C10 alpha-olefin in any combination thereof.

4. The polypropylene composition according to any of the preceding claims, wherein the elastomeric propylene copolymer (EPC) dispersed in the matrix (M) is a unimodal or bimodal composition.

5. The polypropylene composition according to any one of the preceding claims, wherein the heterophasic propylene copolymer has a melting temperature ($T_m$) in the range of from 160 to 170 °C and/or a crystallization temperature ($T_c$) of greater than 110 °C, $T_m$ and $T_c$ being measured by differential scanning calorimetry (DSC).

6. The polypropylene composition according to any one of the preceding claims, which has a flexural modulus, determined in 3-point-bending according to ISO 178:2010 on 80x10x4 mm$^3$ test bars injection molded at 23°C in line with EN ISO 1873-2, in the range of from 900 to 1900 MPa.

7. The polypropylene composition according to any one of the preceding claims, which has a Charpy notched impact strength at 23 °C, determined according to ISO 179 1eA using an injection molded test specimen (80 × 10 × 4 mm) as produced according to ISO 1873, of at least 5.5 kJ/m$^2$.

8. The polypropylene composition according to any one of the preceding claims, which has a puncture energy, determined according to the instrumented falling weight test according to ISO 6603-2 at 23 °C as described herein and using injection molded plaques of 60×60×1 mm and a test speed of 2.2 m/s, of at least 15.0 J.

9. A process for preparing a polypropylene composition according to any one of the preceding claims, comprising the following stages (i) and (ii):

(i) preparation of the matrix phase of the heterophasic propylene copolymer of the polypropylene composition, wherein stage (i) comprises the following steps:
B2) polymerisation of propylene to afford a propylene homopolymer, step B2 being conducted in at least one slurry phase reactor, and
(ii) preparation of the disperse phase of the heterophasic propylene copolymer of the polypropylene composition, wherein stage (ii) comprises the following step:
B3) co-polymerisation of propylene with an alpha-olefin comonomer to result in an olefin-propylene copolymer, step B3 being conducted in at least one gas phase reactor, and wherein:

> a) the process B2 is conducted at a reactor temperature of between 70 and 110 °C, and
> b) the process B3 is conducted at a reactor temperature of between 65 and 110 °C,

wherein the propylene-hexene random copolymer (B) is blended with the heterophasic propylene copolymer (A) by mechanical blending or by in situ-polymerization in any order.

10. The process according to claim 9, wherein the heterophasic propylene copolymer has been polymerised in the presence of

> a) a Ziegler-Natta catalyst (ZN-C) comprising compounds (TC) of a transition metal of Group 4 to 6 of the IUPAC Periodic Table of Elements, a Group 2 metal compound (MC) and an internal donor (ID), wherein said internal donor (ID) is a non-phthalic compound, preferably is a non-phthalic acid ester,
> b) a co-catalyst (Co), and
> c) optionally an external donor (ED).

11. The process according to claim 10, wherein the internal donor (ID) is selected from the group consisting of optionally substituted malonates, maleates, succinates, glutarates, cyclohexene-1,2-dicarboxylates, benzoates and derivatives and/or mixtures thereof, preferably from citraconates.

12. The process according to any one of claims 9 to 11, wherein after step B3, stage (ii) further comprises a step B4):
B4) co-polymerisation of propylene with an alpha-olefin comonomer to result in an olefin-propylene copolymer.

13. Use of a polypropylene composition according to any one of claims 1 to 8 for the production of molded articles, preferably injection molded articles.

14. Article comprising a polypropylene composition according any one of claims 1 to 8, preferably a thin wall molded article.

**Patentansprüche**

1. Polypropylenzusammensetzung, umfassend ein Gemisch aus

> (A) 75,0 bis 95,0 Gew.-%, bezogen auf die Gesamtmenge der Zusammensetzung, eines heterophasigen Propylencopolymers (HECO), umfassend

>> (A-1) 70,0 bis 90,0 Gew.-%, bezogen auf die Gesamtmenge des HECO, einer Matrix (M), die ein Propylenhomopolymer (H-PP) mit einem $MFR_2$, bestimmt bei 230 °C, 2,16 kg gemäß ISO 1133, von 20 bis 800 g/10min ist, und
>> (A-2) 10,0 bis 30,0 Gew.-%, bezogen auf die Gesamtmenge des HECO, eines elastomeren Propylencopolymers (EPC), das in der Matrix (M) dispergiert ist, wobei das heterophasige Propylencopolymer einen Gehalt an Ethylen ($C_2$)-Comonomer, bestimmt aus seiner in kaltem Xylol löslichen (XCS-) Fraktion gemäß ISO 16152; erste Ausgabe, 1.7.2005 bei 25 °C, von 15,0 bis 50,0 Gew.-% und eine intrinsische Viskosität (IV) der XCS-Fraktion, bestimmt gemäß DIN ISO 1628/1 in Decalin bei 135 °C, von 1,2 bis 4,5 dl/g aufweist, und

> (B) 5,0 bis 25,0 Gew.-%, bezogen auf die Gesamtmenge der Zusammensetzung, eines Copolymers (CPH) aus Propylen und 1-Hexen,

wobei das Copolymer (CPH) aus Propylen und 1-Hexen einen Hexengehalt im Bereich von 2,0 bis 10,0 Gew.-% und eine $MFR_2$, bestimmt bei 230 °C, 2,16 kg gemäß ISO 1133, in einem Bereich von 0,4 bis 12,0 g/10min aufweist, und

das Copolymer (CPH) aus Propylen und 1-Hexen

(i) ein erstes statistisches Propylencopolymer (B-1) aus Propylen und 1-Hexen, und
(ii) ein zweites statistisches Propylencopolymer (B-2) aus Propylen und 1-Hexen mit einem höheren 1-Hexen-Gehalt als das erste statistische Propylencopolymer (B-1) umfasst,

wobei die Polypropylenzusammensetzung eine $MFR_2$, bestimmt bei 230 °C, 2,16 kg gemäß ISO 1133, im Bereich von 15 bis 300 g/10min aufweist.

2. Polypropylenzusammensetzung nach Anspruch 1, wobei das Copolymer (CPH) aus Propylen und 1-Hexen einen in Xylol löslichen Gehalt (XCS), bestimmt gemäß ISO 16152; erste Ausgabe, 1.7.2005 bei 25 °C, im Bereich von 1,0 bis 30,0 Gew.-% aufweist.

3. Polypropylenzusammensetzung nach Anspruch 1 oder 2, wobei das Comonomer des in der Matrix (M) dispergierten elastomeren Propylencopolymers (EPC) ein Ethylen und ein alpha-C4- bis C10-Olefin in einer beliebigen Kombination davon ist.

4. Polypropylenzusammensetzung nach einem der vorhergehenden Ansprüche, wobei das in der Matrix (M) dispergierte elastomere Propylencopolymer (EPC) eine unimodale oder bimodale Zusammensetzung ist.

5. Polypropylenzusammensetzung nach einem der vorhergehenden Ansprüche, wobei das heterophasige Propylencopolymer eine Schmelztemperatur ($T_m$) im Bereich von 160 bis 170 °C und/oder eine Kristallisationstemperatur ($T_c$) von mehr als 110 °C aufweist, wobei $T_m$ und $T_c$ mittels dynamischer Differenzkalorimetrie (DSC) gemessen werden.

6. Polypropylenzusammensetzung nach einem der vorhergehenden Ansprüche, die einen Biegemodul, bestimmt bei 3-Punkt-Biegung gemäß ISO 178:2010 an 80x10x4 $mm^3$ großen Teststäbchen, die bei 23 °C gemäß EN ISO 1873-2 spritzgegossen wurden, im Bereich von 900 bis 1900 MPa aufweist.

7. Polypropylenzusammensetzung nach einem der vorhergehenden Ansprüche, die eine Kerbschlagzähigkeit nach Charpy bei 23 °C, bestimmt gemäß ISO 179 1eA unter Verwendung eines spritzgegossenen Prüfstücks (80 × 10 × 4 mm), das gemäß ISO 1873 hergestellt wurde, von mindestens 5,5 $kJ/m^2$ aufweist.

8. Polypropylenzusammensetzung nach einem der vorhergehenden Ansprüche, die eine Durchstoßenergie, bestimmt gemäß dem instrumentierten Fallgewichtstest gemäß ISO 6603-2 bei 23 °C, wie hierin beschrieben, und unter Verwendung von spritzgegossenen Plättchen von 60×60×1 mm und einer Testgeschwindigkeit von 2,2 m/s, von mindestens 15,0 J aufweist.

9. Verfahren zum Herstellen einer Polypropylenzusammensetzung nach einem der vorhergehenden Ansprüche, umfassend die folgenden Stufen (i) und (ii):

(i) Herstellung der Matrixphase des heterophasigen Propylencopolymers der Polypropylenzusammensetzung, wobei Stufe (i) die folgenden Schritte umfasst:
B2) Polymerisation von Propylen, um ein Propylenhomopolymer zu ergeben, wobei Schritt B2 in mindestens einem Aufschlämmungsphasenreaktor durchgeführt wird, und
(ii) Herstellung der dispersen Phase des heterophasigen Propylencopolymers der Polypropylenzusammensetzung, wobei Stufe (ii) den folgenden Schritt umfasst:
B3) Copolymerisation von Propylen mit einem alpha-Olefin-Comonomer, um zu einem Olefin-Propylen-Copolymer zu führen, wobei Schritt B3 in mindestens einem Gasphasenreaktor durchgeführt wird, und wobei:

a) der Prozess B2 bei einer Reaktortemperatur zwischen 70 und 110 °C durchgeführt wird, und
b) der Prozess B3 bei einer Reaktortemperatur zwischen 65 und 110 °C durchgeführt wird,

wobei das statistische Propylen-Hexen-Copolymer (B) mit dem heterophasigen Propylencopolymer (A) durch mechanisches Mischen oder durch In-situ-Polymerisation in beliebiger Reihenfolge gemischt wird.

**10.** Verfahren nach Anspruch 9, wobei das heterophasige Propylencopolymer in Gegenwart

a) eines Ziegler-Natta-Katalysators (ZN-C), der Verbindungen (TC) eines Übergangsmetalls der Gruppe 4 bis 6 des IUPAC-Periodensystems der Elemente, eine Verbindung mit einem Gruppe-2-Metall (MC) und einen internen Donor (ID) umfasst, wobei der interne Donor (ID) eine Nicht-Phthalsäureverbindung ist, vorzugsweise ein Nicht-Phthalsäureester,
b) eines Co-Katalysators (Co) und
c) gegebenenfalls eines externen Donors (ED) polymerisiert wurde.

**11.** Verfahren nach Anspruch 10, wobei der interne Donor (ID) ausgewählt ist aus der Gruppe, die aus gegebenenfalls substituierten Malonaten, Maleaten, Succinaten, Glutaraten, Cyclohexen-1,2-dicarboxylaten, Benzoaten und Derivaten und/oder Gemischen davon besteht, vorzugsweise aus Citraconaten.

**12.** Verfahren nach einem der Ansprüche 9 bis 11, wobei nach Schritt B3 die Stufe (ii) ferner einen Schritt B4) umfasst:
B4) Copolymerisation des Propylens mit einem alpha-Olefin-Comonomer, um zu einem Olefin-Propylen-Copolymer zu führen.

**13.** Verwendung einer Polypropylenzusammensetzung nach einem der Ansprüche 1 bis 8 zur Herstellung von Formgegenständen, vorzugsweise spritzgegossenen Gegenständen.

**14.** Gegenstand, umfassend eine Polypropylenzusammensetzung nach einem der Ansprüche 1 bis 8, vorzugsweise ein dünnwandiger Formgegenstand.

## Revendications

**1.** Composition de polypropylène comprenant un mélange de

(A) 75,0 à 95,0 % en poids, par rapport à la quantité totale de la composition, d'un copolymère de propylène hétérophasique (HECO) comprenant

(A-1) 70,0 à 90,0 % en poids, par rapport à la quantité totale de l'HECO, d'une matrice (M) qui est un homopolymère de propylène (H-PP) avec un MFR2, déterminé à 230 °C, 2,16 kg selon ISO 1133 de 20 - 800 g/10 min, et
(A-2) 10,0 à 30,0 % en poids, sur la base de la quantité totale de l'HECO, d'un copolymère de propylène élastomère (EPC) dispersé dans ladite matrice (M), ledit copolymère de propylène hétérophasique ayant une teneur en co-monomère éthylène (C2), déterminée à partir de sa fraction soluble à froid dans le xylène (XCS) selon la norme ISO 16152 ; première édition, 2005-07-01 à 25 °C, de 15,0 à 50,0 % en poids et une viscosité intrinsèque (IV) de la fraction XCS de 1,2 à 4,5 dl/g, déterminée selon la norme DIN ISO 1628/1 dans la décaline à 135 °C, et

(B) 5,0 à 25,0 % en poids, par rapport à la quantité totale de la composition, d'un copolymère (CPH) de propylène et de 1-hexène,

dans laquelle le copolymère (CPH) de propylène et de 1-hexène a une teneur en hexène dans la plage allant de 2,0 à 10,0 % en poids et un MFR2 déterminé à 230 °C, 2,16 kg selon la norme ISO 1133, dans une plage allant de 0,4 à 12,0 g/10 min, et
le copolymère (CPH) de propylène et de 1-hexène comprend

(i) un premier copolymère de propylène aléatoire (B-1) de propylène et de 1-hexène, et
(ii) un deuxième copolymère de propylène aléatoire (B-2) de propylène et de 1-hexène ayant une teneur en 1-hexène plus élevée que le premier copolymère de propylène aléatoire (B-1),

dans laquelle la composition de polypropylène a un MFR2 déterminé à 230 °C, 2,16 kg selon la norme ISO 1133 dans la plage allant de 15 à 300 g/10 min.

**2.** Composition de polypropylène selon la revendication 1, dans laquelle le copolymère (CPH) de propylène et de 1-hexène a une teneur en fraction soluble dans le xylène (XCS) dans la plage allant de 1,0 à 30,0 % en poids, déterminée selon la norme ISO 16152 ; première édition, 2005-07-01 à 25 °C.

3. Composition de polypropylène selon la revendication 1 ou 2, dans laquelle le comonomère du copolymère de propylène élastomère (EPC) dispersé dans la matrice (M) est un éthylène et une alpha-oléfine en C4 à C10 dans n'importe quelle combinaison de ceux-ci.

4. Composition de polypropylène selon l'une quelconque des revendications précédentes, dans laquelle le copolymère de propylène élastomère (EPC) dispersé dans la matrice (M) est une composition unimodale ou bimodale.

5. Composition de polypropylène selon l'une quelconque des revendications précédentes, dans laquelle le copolymère de propylène hétérophasique présente une température de fusion ($T_m$) dans la plage allant de 160 à 170 °C et/ou une température de cristallisation ($T_c$) supérieure à 110 °C, $T_m$ et $T_c$ étant mesurées par calorimétrie différentielle à balayage (DSC).

6. Composition de polypropylène selon l'une quelconque des revendications précédentes, qui présente un module de flexion, déterminé en flexion à 3 points selon la norme ISO 178:2010 sur des éprouvettes de $80 \times 10 \times 4$ mm$^3$ moulées par injection à 23 °C selon la norme EN ISO 1873-2, dans la plage allant de 900 à 1 900 MPa.

7. Composition de polypropylène selon l'une quelconque des revendications précédentes, qui présente une résistance au choc Charpy sur éprouvette entaillée à 23 °C, déterminée selon la norme ISO 179 1eA à l'aide d'une éprouvette moulée par injection ($80 \times 10 \times 4$ mm) telle que produite selon la norme ISO 1873, d'au moins 5,5 kJ/m$^2$.

8. Composition de polypropylène selon l'une quelconque des revendications précédentes, qui présente une énergie de perforation, déterminée selon l'essai de chute de poids instrumenté selon la norme ISO 6603-2 à 23 °C tel que décrit dans le présent document et en utilisant des plaques moulées par injection de $60 \times 60 \times 1$ mm et une vitesse d'essai de 2,2 m/s, d'au moins 15,0 J.

9. Procédé de préparation d'une composition de polypropylène selon l'une quelconque des revendications précédentes, comprenant les étapes (i) et (ii) suivantes :

(i) la préparation de la phase matrice du copolymère de propylène hétérophasique de la composition de polypropylène, l'étape (i) comprenant les étapes suivantes :
B2) la polymérisation de propylène pour obtenir un homopolymère de propylène, l'étape B2 étant réalisée dans au moins un réacteur en phase suspension, et
(ii) la préparation de la phase dispersée du copolymère de propylène hétérophasique de la composition de polypropylène, l'étape (ii) comprenant l'étape suivante :
B3) la copolymérisation du propylène avec un comonomère alpha-oléfine pour obtenir un copolymère oléfine-propylène, l'étape B3 étant réalisée dans au moins un réacteur en phase gazeuse, et :

a) le procédé B2 étant réalisé à une température du réacteur comprise entre 70 et 110 °C, et
b) le procédé B3 étant réalisé à une température du réacteur comprise entre 65 et 110 °C,

le copolymère aléatoire propylène-hexène (B) étant mélangé au copolymère de propylène hétérophasique (A) par mélange mécanique ou par polymérisation in situ dans n'importe quel ordre.

10. Procédé selon la revendication 9, dans lequel le copolymère de propylène hétérophasique a été polymérisé en présence de

a) un catalyseur Ziegler-Natta (ZN-C) comprenant des composés (TC) d'un métal de transition des groupes 4 à 6 du tableau périodique des éléments de l'UICPA, un composé d'un métal du groupe 2 (MC) et un donneur interne (ID), ledit donneur interne (ID) étant un composé non phtalique, de préférence un ester d'acide non phtalique,
b) un co-catalyseur (Co), et
c) éventuellement, un donneur externe (ED).

11. Procédé selon la revendication 10, dans lequel le donneur interne (ID) est choisi dans le groupe constitué par les malonates, maléates, succinates, glutarates, cyclohexène-1,2-dicarboxylates, benzoates, éventuellement substitués, et leurs dérivés et/ou mélanges, de préférence parmi les citraconates.

**12.** Procédé selon l'une quelconque des revendications 9 à 11, dans lequel après l'étape B3, l'étape (ii) comprend en outre une étape B4) :

B4) la copolymérisation de propylène avec un comonomère alpha-oléfine pour obtenir un copolymère oléfine-propylène.

**13.** Utilisation d'une composition de polypropylène selon l'une quelconque des revendications 1 à 8 pour la production d'articles moulés, de préférence d'articles moulés par injection.

**14.** Article comprenant une composition de polypropylène selon l'une quelconque des revendications 1 à 8, de préférence article moulé à paroi mince.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2585527 A1
- WO 2008074423 A1
- WO 2008077773 A1
- EP 3456776 A1
- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- WO 2015011135 A1
- WO 2013007650 A1

**Non-patent literature cited in the description**

- **BUSICO, V ; CIPULLO, R.** *Prog. Polym. Sci.,* 2001, vol. 26, 443
- **BUSICO, V. et al.** *Macromolecules,* 1997, vol. 30, 6251
- **ZHOU, Z. et al.** *J. Mag. Reson.,* 2007, vol. 187, 225
- **BUSICO, V. et al.** *Rapid Commun.,* 2007, vol. 28, 11289
- **RESCONI, L. et al.** *Chem. Rev.,* 2000, vol. 100, 1253
- **WANG, W-J ; ZHU, S.** *Macromolecules,* 2000, vol. 33, 1157
- **CHENG, H. N.** *Macromolecules,* 1984, vol. 17, 1950
- **BUSICO, V. ; CIPULLO, R.** *Prog. Polym. Sci.,* 2001, vol. 26, 443
- **SINGH, G. et al.** *Polymer Testing,* 2009, vol. 28 (5), 475
- **ZHOU, Z et al.** *J. Mag. Reson.,* 2007, vol. 187, 225
- **BUSICO, V. et al.** *Macromol. Rapid Commun.,* 2007, vol. 28, 1128
- **L. RESCONI, L. et al.** *Chem. Rev.,* 2000, vol. 100 (4), 1253
- **CHENG, H. N.** *Macromolecules,* 1984, vol. 17, 1950
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M ; NAITO, Y ; MIZUNUMA, K ; MIYAT-AKE, T.** *Macromolecules,* 1982, vol. 15, 1150